# EUROPEAN PATENT SPECIFICATION

(11) **EP 4 575 404 B1**
(45) Date of publication and mention of the grant of the patent: **11.11.2026**
(21) Application number: 24202877.7
(22) Date of filing: 26.09.2024
(51) Int. Cl.: G01C 21/20

(54) **METHOD, APPARATUS AND STORAGE MEDIUM FOR VEHICLE FINDING**
VERFAHREN, VORRICHTUNG UND SPEICHERMEDIUM ZUR FAHRZEUGSUCHE
PROCÉDÉ, APPAREIL ET SUPPORT D'INFORMATIONS POUR TROUVER UN VÉHICULE

(30) Priority: 28.09.2023 CN 202311281016; 30.07.2024 CN 202411040596
(43) Date of publication of application: 25.06.2025
(60) Divisional application: 26199377.8 / 4 835 408
(73) Proprietor: Volvo Car Corporation, 405 31 Göteborg (SE)
(72) Inventor: ZHONG, Weiyu, Shanghai (CN); REN, Qianyu, Shanghai (CN)
(74) Representative: Kransell & Wennborg KB

(56) References cited:
- WO-A1-2022/174750
- CN-A- 111 368 765
- CN-A- 116 434 589
- KR-A- 20200 049 478
- US-A1- 2023 037 777

## Description

### CROSS-REFERENCE TO RELATED APPLICATION

This application claims priority to Chinese patent application No. 202311281016.X, filed with the Patent Office of China on September 28, 2023 entitled "METHOD, APPARATUS AND STORAGE MEDIUM FOR VEHICLE FINDING" and Chinese patent application No. 202411040596.8, filed with the Patent Office of China on July 30, 2024 entitled "METHOD, APPARATUS, MEDIUM AND PRODUCT FOR VEHICLE FINDING".

### TECHNICAL FIELD

The present disclosure relates to the field of vehicles, and more particularly, to a method and an apparatus for vehicle finding.

### BACKGROUND

With the development of the economy and society, vehicles have become an important tool in people's daily lives.

In order to cope with the continuous increase in the number of vehicles, the scales of parking lots are continuously expanding, and paths in parking lots are becoming increasingly complicated. When the user returns to the parking lot to find his/her vehicle after finishing the business, it is often difficult for him/her to find his/her own parked vehicle reversely among the numerous vehicles parked in the parking lot.

Moreover, in a case that the vehicle is parked in for example an indoor parking lot, since the quality of the signal of the Global Positioning System (GPS) is poor in the parking lot, or even there is almost no GPS signal, it is difficult for the user to position the vehicle by means of the GPS signal so as to find the vehicle.

CN 116434589 A describes an intelligent vehicle searching method, device and equipment and a storage medium, which are used for searching a vehicle according to a real-time position and a parking position obtained by performing position matching on a three-dimensional map through real-time picture information.

### SUMMARY

According to the present invention, there is provided a method for vehicle finding according to independent claim 1 and a device for vehicle finding according to independent claim 6. Further details are included in the dependent claims.

By utilizing the method and device provided by the present disclosure, the defects of the prior art can be overcome, and an intelligent reverse vehicle finding function with high universality, high calculation efficiency, and high recognition accuracy can be realized while reducing the hardware requirements and the cost for implementation of the function.

### BRIEF DESCRIPTION OF DRAWINGS

These and/or other aspects and advantages of the present disclosure will become clearer and easier to be understood, from the following detailed description of the embodiments of the present disclosure, taken in conjunction with the accompanying drawings, in which:
Fig. 1 shows a schematic diagram of a system for vehicle finding according to an embodiment of the present disclosure;
Fig. 2 shows a flowchart of a method for vehicle finding according to an embodiment of the present disclosure;
Fig. 3 shows a non-limiting example of image data of a surrounding environment of a vehicle according to an embodiment of the present disclosure;
Fig. 4 shows an example feature extraction process according to an embodiment of the present disclosure;
Fig. 5 shows a flowchart of a method for vehicle finding which is cooperatively performed at a vehicle side, a cloud side, and a user side according to an embodiment of the present disclosure;
Fig. 6 shows a schematic diagram of an apparatus for vehicle finding according to an embodiment of the present disclosure;
Fig. 7 shows a flowchart of a method for vehicle finding according to another embodiment of the present disclosure;
Fig. 8 shows an example process of extracting a candidate target object in a method for vehicle finding according to another embodiment of the present disclosure;
Fig. 9 shows a schematic diagram of an apparatus for vehicle finding according to another embodiment of the present disclosure; and
Fig. 10 shows a schematic diagram of an apparatus for vehicle finding according to an embodiment of the present disclosure.

It should be understood that these accompanying drawings are used to provide a further understanding of the embodiments of the present invention, constitute a part of the specification, and together with the embodiments of the present invention, serve to explain the present invention, but do not constitute a limitation of the present invention. In addition, in the accompanying drawings, like reference numerals generally represent like parts or steps.

### DETAILED DESCRIPTION

In the prior art, a reverse vehicle finding system, which is applied in a parking lot where there might be no GPS signal or poor signal, usually uses infrastructures (such as a multi-Bluetooth base station, a camera, etc.) arranged in the parking lot to cooperate with a vehicle side to position and record the vehicle, and send positioning information to a user, thereby providing the user with a reverse vehicle finding function.

There are some problems with such prior art. Specifically, such technical solutions need to depend on lot-side infrastructures of the parking lot, such as Bluetooth base station and camera, and thus need a lot of cost for software and hardware infrastructures as well as cost for maintenance. On the other hand, a parking lot configured with no such infrastructures cannot provide a vehicle finding service for the user. In addition, since at present there is no unified regulation or standard for technical solutions of infrastructures of parking lots, respective parking lots mostly use their own customized technical solution. Therefore, from the user's point of view, it might be difficult to achieve a unified vehicle finding solution that can adapt to respective parking lots, causing great inconvenience.

With respect to the above problems in the prior art, the present disclosure provides a method and an apparatus for vehicle finding.

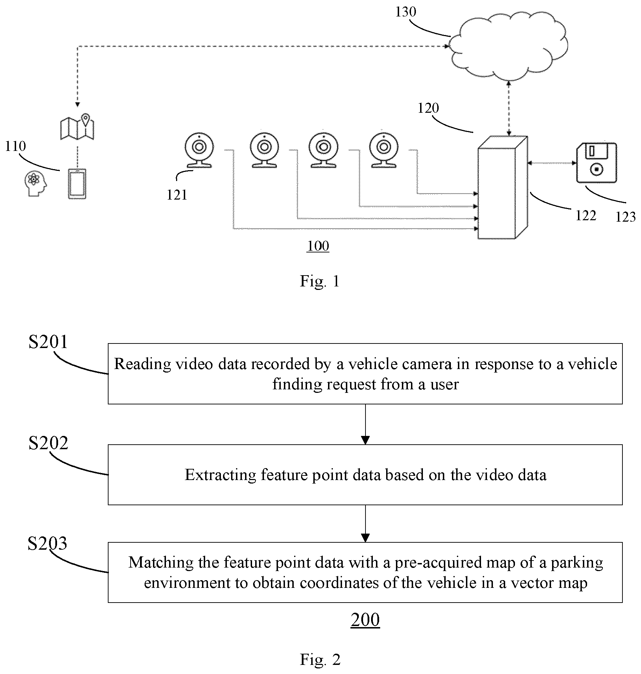

Fig. 1 shows a schematic diagram of a system 100 for vehicle finding according to an embodiment of the present disclosure.

As shown in Fig. 1, the system 100 may include a user-side apparatus 110 and a vehicle-side apparatus 120, in which the vehicle-side apparatus 120 may be communicatively coupled to the user-side apparatus 110.

The user-side apparatus 110 may be a user's portable device, such as a mobile phone, through which the user can interact with the vehicle-side apparatus 120 to perform a vehicle finding process.

The vehicle-side apparatus 120 may be configured to perform the method for vehicle finding described in the embodiment of the present disclosure. Specifically, the vehicle-side apparatus 120 may include a camera set 121, a data processing apparatus 122 and a data storage apparatus 123, in which the data processing apparatus 122 may be configured to read and process video data of the camera set 121, and the data storage apparatus 123 may be configured to store the video data of the camera set 121. The data processing apparatus 122 may be coupled to the camera set 121, for example, through a cable; and the data processing apparatus 122 may be coupled to the data storage apparatus 123, for example, through a USB interface. The camera set 121 may be any apparatus with camera function, which is installed on the vehicle and is used for recording driving process of the vehicle, for example, a driving recorder.

In an embodiment according to the present disclosure, for example, the camera set 121 may include one or more of a plurality of cameras arranged at the front side, rear side, left side and right side of the vehicle. For example, it may include the cameras in above respective directions to constitute a panoramic camera system, so that a video of vehicle driving process with multiple perspectives can be obtained for vehicle finding.

In an embodiment according to the present disclosure, the user may remotely issue a vehicle finding request to the vehicle-side apparatus 120 through the user-side apparatus 110. In a case that the vehicle finding request of the user is received, the vehicle-side apparatus 120 may be woke up from a sleep state, and start to power on and operate. For example, the data processing apparatus 122 may be launched in response to the vehicle finding request of the user-side apparatus, read video data from a data cache of the camera set 121, process the video data to obtain a processing result that can be used to help the user in vehicle finding, and finally send this processing result back to the user-side apparatus 110 for the user to find the vehicle. In an embodiment according to the present disclosure, this processing result may include coordinates of the vehicle in a vector map. In another embodiment according to the present disclosure, this processing result may include a recognition result for determining a position of the user's vehicle.

In an embodiment according to the present invention, the system 100 may further include a cloud server 130. As shown in Fig. 1, the user-side apparatus 110 and the vehicle-side apparatus 120 may be communicatively coupled to the cloud server 130, respectively, and can communicate via the cloud server 130. As a non-limiting example, a remote wake-up initiated by the user for the vehicle-side apparatus 120 may be performed by the cloud server 130. Specifically, as shown in Fig. 1, when the user needs to return to the parking lot to find the vehicle, he/she may issue a vehicle finding request through the user-side apparatus 110. The cloud server 130 may receive the vehicle finding request initiated by the user and remotely wake up the vehicle-side apparatus 120 in response to this vehicle finding request, and then the vehicle-side apparatus 120 starts to power on and operates. After the vehicle-side apparatus 120 obtains the recognition result for the user to find the vehicle, this recognition result is sent by the cloud server 130 back to the user-side apparatus 110 for the user to find the vehicle.

In addition, as a non-limiting example, part of data processing operations that could have been performed by the vehicle-side apparatus 120 may be completed in the cloud. For example, some data processing operations may involve a large amount of calculation, and data processing resources local to the vehicle-side apparatus 120 may be insufficient for their local processing, or the cost for local processing is too high. For example, some data processing operations may need to pre-store a large amount of data (such as a large amount of map data), whereas the data storage resources local to the vehicle-side apparatus 120 may be insufficient for local storage, or the cost for local storage is too high.

Next, a method for vehicle finding according to an embodiment of the present disclosure will be described in detail with reference to Fig. 2.

Fig. 2 shows a flowchart of a method 200 for vehicle finding according to an embodiment of the present disclosure, and this method 200 may be performed at a vehicle side.

As shown in Fig. 1, at step S201, video data recorded by a vehicle camera may be read in response to a vehicle finding request from a user.

The vehicle camera may be any apparatus with camera function, which is installed on the vehicle and is used for recording the driving process of the vehicle, for example, a driving recorder. In the present disclosure, the apparatus at the vehicle side that performs the method 200 may be coupled to the driving recorder installed on this vehicle (such as through a cable), so that the video data of the driving recorder may be read for further processing. In an embodiment according to the present disclosure, the driving recorder may include a plurality of cameras with different shooting orientations, so that video data of a surrounding environment of the vehicle at different angles can be obtained. As a non-limiting example, the driving recorder may include at least 4 cameras with different shooting orientations, such as a forward-view camera, a left camera, a right camera, and a rear-view camera, to constitute a panoramic camera subsystem, so that any video in the surrounding environment up to 360 degrees around the vehicle can be obtained, and the vehicle can be positioned based on feature points present in the 360-degree environment, thereby achieving the vehicle finding.

At step S202, feature point data may be extracted based on the video data. In the present disclosure, feature points may refer to points capable of characterizing visual information of objects in the surrounding environment, so that the position of the vehicle can be achieved based on the feature points, thereby achieving the vehicle finding.

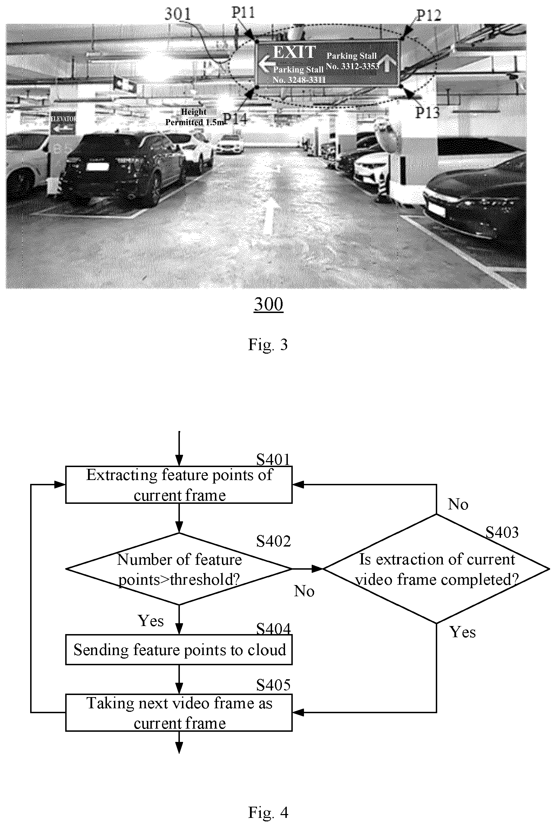

Further illustration will be made with reference to Fig. 3, which is an exemplary video frame 300 of the video of the surrounding environment of the vehicle shot in the method for vehicle finding according to the embodiment of the present disclosure. This video frame 300 includes columns (e.g., structural columns or load-bearing columns) and signboards (e.g., direction indication boards) in the indoor parking lot, which are representative objects that are helpful for visual feature points matching.

In step S202, feature points may be extracted from video frames by various image processing algorithms. As a non-limiting example, algorithms such as Scale Invariant Feature Transform (SIFT), Speeded Up Robust Feature (SURF), and Gradient Location-Orientation Histogram (GLOH) may be used to extract features such as corner points and edges of the above representative objects. As a non-limiting example, this extraction can be implemented by Simultaneous Localization and mapping (SLAM) modeling. As shown in Fig. 3, when processing the video frame 300, corner points P11, P12, P13 and P14 of signboard 301, which are the representative objects therein, may be extracted as feature points, so that vehicles can be positioned based on the feature points of the signboard 301.

It should be understood that the above method for feature extraction is merely a non-limiting example, and feature point data may also be extracted based on video data in another manner, such as through deep learning.

In an embodiment according to the present disclosure, feature point extraction may be performed frame by frame on one or more ways of video data recorded by one or more cameras in the driving recorder that is in a period of time before parking (such as 10 minutes before parking).

In an embodiment according to the present disclosure, confidences for respective video frames may be determined based on the feature point extraction, and corresponding video frames may be screened based on the confidences for the respective video frames, so as to exclude feature point data corresponding to video frames with a confidence lower than a confidence threshold (such as 80%). In this embodiment, a confidence for a video frame is a value that can characterize the quality of this video frame. Various appropriate manners can be adopted to determine the confidence for the calculation of the video frames. For example, the more feature points are extracted from a video frame, the higher confidence for this video frame can be determined.

When the system includes the cloud server, the screened feature point data may be sent to the cloud for subsequent processing. In this way, the feature points of video frames with relatively high quality can be sent to the cloud server, thereby improving the processing quality; moreover, since only the coordinates of the feature points in the video frames with relatively high quality instead of all the video frames need to be sent to the cloud server for subsequent processing, the amount of data transmission needed to be performed between the vehicle-side apparatus and the cloud server is greatly reduced.

In a case that the system does not include the cloud server, the subsequent processing may also be performed locally at the vehicle side apparatus.

In an embodiment according to the present disclosure, in the process of extracting the feature points, it is unnecessary to perform a complete feature point extraction on each video frame of the read video data, thereby further improving the processing speed of feature point extraction and reducing the amount of calculation.

Fig. 4 shows an example feature extraction process according to an embodiment of the present disclosure. As shown in Fig. 4, at S401, feature points of a current frame may be extracted; next, at S402, a judgment may be made whether a number of feature points that have been extracted from the current frame at present is more than a number threshold.

If it is determined at S402 that the number of feature points that have been extracted from the current frame at present is more than the number threshold, all feature points that have been extracted from the current frame may be sent to the cloud at S404, and next a next video frame of the current frame is taken as the current frame at S405, and a next round of feature point extraction may be started by returning to S401.

In other words, in the process of performing feature point extraction on the video data frame by frame, in a case that it is determined that the number of feature points that have been extracted in the current video frame on which the feature point extraction is being performed is more than the number threshold, the feature point extraction of the current video frame may be stopped, and the feature point extraction of the next video frame may be started. Since the number of feature points that have been extracted in the current video frame is more than the number threshold, indicating that the confidence for this current video frame is higher than the confidence threshold, which may be considered that a sufficient number of feature points with high quality have been extracted from the current video frame, it is unnecessary to continue the feature point extraction of the current video frame, but the feature point extraction of the next video frame may be started.

In an embodiment according to the present disclosure, in a case that the system 100 as shown in Fig. 1 includes the cloud server 130 and the feature point matching is performed at the cloud server 130, in the process of performing feature point extraction frame by frame, after the feature point extraction of the current video frame is stopped and before the feature extraction of the next video frame is started, the feature point data of the current video frame that have been extracted may be further sent to the cloud, so that subsequent processing on feature points can be performed in the cloud soon.

If it is determined at S402 that the number of feature points that have been extracted from the current frame at present is not more than the number threshold, a judgment is made at S403 whether the extraction of the current frame has been completed. If it is determined at S403 that the extraction of the current frame has been completed, a next video frame of the current frame may be taken as the current frame at S405, and a next round of feature point extraction may be started by returning to S401. If it is determined at S403 that the extraction of the current frame has not been completed, the extraction of feature points of the current frame may be continued by returning to S401.

In other words, in the process of performing feature point extraction on the video data frame by frame, in a case that it is determined that the number of all feature points extracted in the current video frame is not more than the number threshold, the feature points extracted in the current video frame may be excluded, and the feature point extraction of the next video frame may be started. Since the number of all feature points extracted in the current video frame is not more than the number threshold, indicating that the confidence for the current video frame is lower than the confidence threshold, which may be considered that the quality of the current video frame is low and it is difficult to extract sufficiently abundant feature information therefrom, the feature data extracted from this video frame will no longer be considered in the subsequent processing.

Referring back to Fig. 2, at step S203, the feature point data may be matched with a pre-acquired map of a parking environment to obtain coordinates of the vehicle in a vector map.

In an embodiment according to the present disclosure, this step of feature matching may be performed at the vehicle-side apparatus or at the cloud server.

In a case that the step of feature point matching is performed at the cloud server, the pre-acquired map of the parking environment may be a fusion map that is pre-stored in the cloud including a point cloud base map and a vector map. Step S203 of Fig. 2 may further include sending the feature point data to the cloud server, and receiving, from the cloud server, the coordinates of a position of the vehicle in the vector map obtained through feature point matching. As such, the requirements for storage and processing of data at the vehicle-side apparatus can be reduced, and the universality of the method and apparatus proposed herein in different parking lots can be improved.

The pre-acquired point cloud base map of the parking environment (such as parking lot) may include point cloud data measured at roads and intersections in the parking lot for the respective objects (such as columns, signboards, etc.) present in the parking lot, which is applicable for matching with the images actually shot by the vehicle so as to perform visual repositioning; and the vector map may include vector graphic elements (e.g., points, lines, rectangles, polygons, circles, arcs, etc.) describing geometric characteristics of roads and intersections in this parking lot, which are applicable for being rendered on a vehicle-mounted display for the driver to observe and know the position where he/she is located in real time. It should be noted that the point cloud base map and the vector map contained in the fusion map are associated with each other, that is, each position (e.g., road or intersection) in the parking lot can be represented by a specific vector graphic element, and the point cloud pattern that can be observed or measured from this position is also unique to this position, that is, both the vector graphic element and the point cloud pattern of this position have a unique mapping relationship. Since the point cloud base map in the fusion map includes the point cloud data of the entire scenario measured in advance with respect to respective objects in this scenario, by matching the point cloud base map with the feature points extracted in actually shot the video frames, the specific position of the shooting site in the scenario may be determined according to the similarity between the extracted feature points and the point cloud data.

Moreover, in order to make the technical solution of the present disclosure applicable to different sites (such as different parking lots), a fusion map of the sites may be pre-obtained. In a case that the feature point matching is performed locally at the vehicle-side apparatus, the fusion map of this site needs to be updated and stored only locally at the vehicle-side apparatus; and in a case that the feature point matching is performed in the cloud, the fusion map of this site needs to be stored only in the fusion map library of the cloud server.

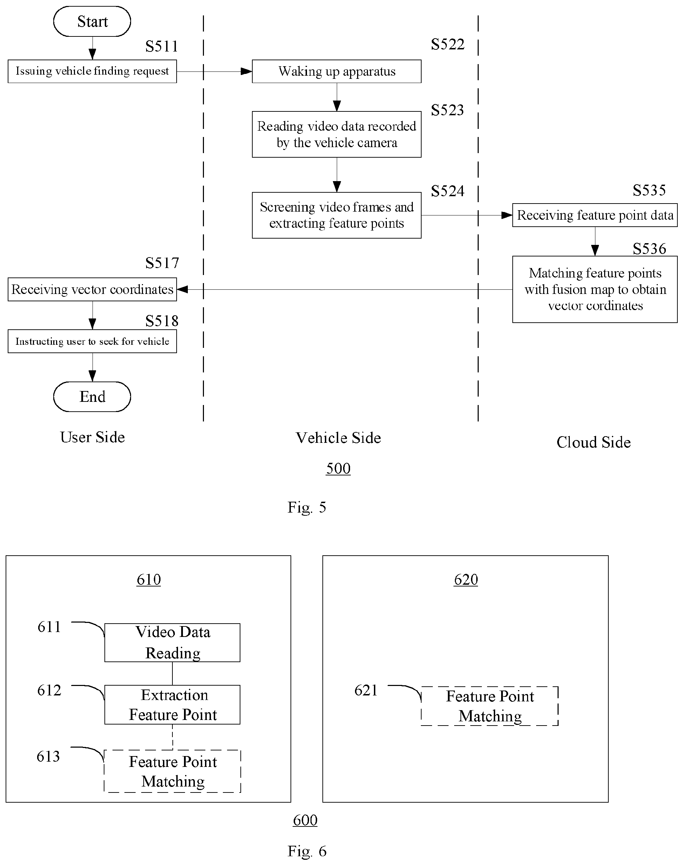

Fig. 5 shows a flowchart of a method 500 for vehicle finding which is cooperatively performed at a vehicle side, a cloud side and a user side according to an embodiment of the present disclosure.

As shown in Fig. 5, at the user side, at S511, a user's portable device may issue a vehicle finding request, so that a vehicle-mounted device is powered on to perform subsequent steps for vehicle finding. This vehicle finding request may be directly sent to the vehicle-mounted device at the vehicle side; and this vehicle finding request may also be sent to a cloud server at the cloud side, and be forwarded by the cloud server to the vehicle-mounted device at the vehicle side.

Next, at the vehicle side, at S522, in response to the vehicle finding request, the vehicle-side apparatus may be woke up and powered on; At S523, the vehicle-side apparatus may read video data recorded by the vehicle camera; and at S524, the vehicle-side apparatus may extract feature points, screen video frames based on confidences obtained in the process of the extraction of feature points, and send feature point data of the screened video frames to the cloud side for feature point matching in the cloud.

Next, at the cloud side, at S535, the cloud server may receive the feature point data from the vehicle side; at S536, the cloud server may match the received feature point data with a fusion map to obtain vector coordinates of the vehicle, and send the vector coordinates to the user's portable device for the user to use to find the vehicle. Specifically, according to the matching degree between the extracted feature points and the point cloud data and the mapping relationship between the point cloud base map and the vector map, the specific position coordinates of the vehicle in the vector map may be determined according to a visual positioning algorithm, and the position coordinates may be sent to the user's device.

Finally, at the user side, at S517, the user's portable device may receive the vector coordinates obtained by feature point matching; and at S518, the user's portable device may instruct the user to find the vehicle based on the vector coordinates. As a non-limiting example, at S518, a rendered floor plan of the parking lot may be displayed on the user's portable device based on the coordinates in the vector map, in which the position of the vehicle is marked, or a path from the current position of the user to the position of the vehicle may be displayed on the user's portable device, so that the positioning result of vehicle finding can be rendered to the user when the user looks at the display in the portable device so as to guide the user to find the vehicle. As a non-limiting example, at S518, the user may be informed of a position indicator of the sought vehicle, such as "B1-256", based on the coordinates in the vector map, so that the user can be informed that the vehicle is located at parking stall No.256 on the first underground floor.

It should be understood that the steps shown in Fig. 5 do not necessarily have to be performed sequentially, and some of the steps may be performed in parallel or repeatedly in a loop. As a non-limiting example, as described above with reference to Fig. 4, the feature point extraction based on video data may be performed frame by frame, so at S524 in Fig. 5, the vehicle-mounted device may send, after the feature points are successfully extracted from one or more video frames, the feature points extracted therein to the cloud for feature point matching, rather than sending, after the feature point extraction of all video frames of video data that in a period of time have been completed, the extracted feature points to the cloud altogether. In addition, in a case that the feature point extraction and the sending of the extracted feature points are performed frame by frame (such as in the embodiment described with reference to Fig. 4), if the cloud server successfully matches the feature points to the points in the fusion map at S536, the method may proceed from step S536 to S517; however, in a case that the feature point matching is unsuccessful, the method may return to step S524 from S536 to perform feature points extraction, that is, to attempt to extract feature points from the next video frame.

Moreover, it should be understood that the steps shown in Fig. 5 do not necessarily have to be performed on the user side, vehicle side or cloud side as shown, and some of the steps may also be performed at other sides. As a non-limiting example, in a case that neither of the number of feature points and the data size needed to be matched does not exceed the processing capacity of the vehicle-mounted device, the steps S535 and S536 shown in Fig. 5 as being performed at the cloud side may also be performed at the vehicle-mounted device.

Fig. 6 shows a schematic diagram of a system 600 for vehicle finding according to an embodiment of the present disclosure. As shown in Fig. 6, the system 600 may include an apparatus 610 arranged at the vehicle side and an apparatus 620 arranged in the cloud. The apparatus 610 at the vehicle side may include a video data reading module 611, a feature point extraction module 612 and a feature point matching module 613. The apparatus 620 in the cloud may include a feature point matching module 621, so that the feature point matching module can be arranged at least one of the cloud or the vehicle side.

Specifically, at the vehicle side, the video data reading module 611 may be configured to read video data recorded by a vehicle camera in response to a vehicle finding request of the user. At the vehicle side, the feature point extraction module 612 may be configured to extract feature point data based on the video data. At the vehicle side or in the cloud, the feature point matching module 613 or 621 may be configured to match the feature point data with a pre-acquired map of a parking environment to obtain coordinates of the vehicle in a vector map.

It should be understood that what is shown in Fig. 6 is merely a non-limiting example of the apparatus 610 arranged at the vehicle side and the apparatus 620 arranged in the cloud, and the apparatuses 610 and 620 may further include one or more modules not shown in Fig. 6, such as a transceiver module, etc.

In addition, according to another embodiment of the present disclosure, the processing result for helping the user to find the vehicle may be obtained according to the video data recorded by the vehicle camera with other methods.

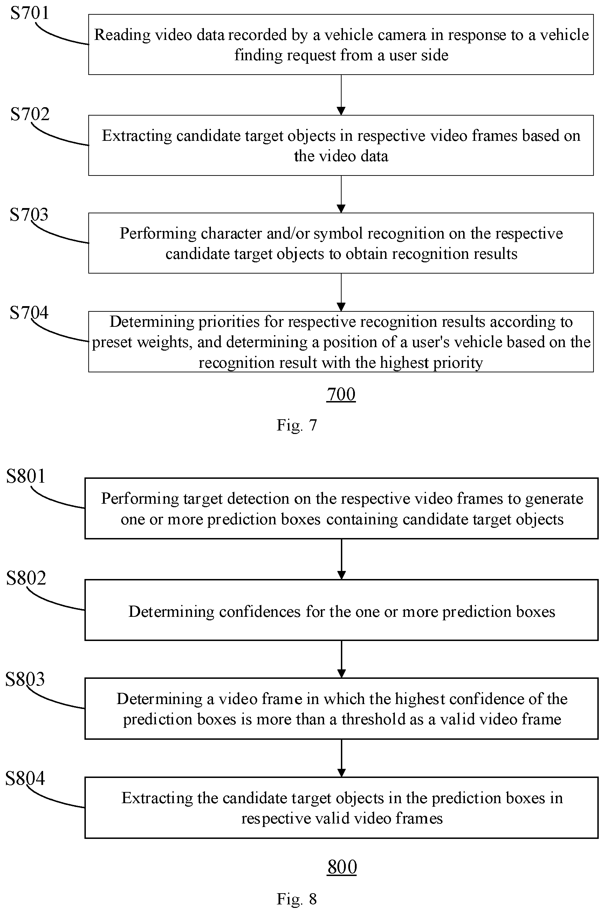

Fig. 7 shows a flowchart of a method 700 for vehicle finding according to another embodiment of the present disclosure, and this method may be performed at a vehicle side.

As shown in Fig. 7, at step S701, video data recorded by vehicle camera may be read in response to a vehicle finding request from a user side.

In the method for vehicle finding according to this embodiment, the read video data may correspond to video data that is from a predetermined occasion before completion of parking to the completion of parking, and this predetermined occasion is for example a predetermined time point (e.g., 5 minutes before the completion of parking), a predetermined distance location (e.g., 100 meters before the completion of parking), etc., which is not limited by the present disclosure. In this way, the read video data can at least partially reflect factors such as time during parking, driving distance of vehicle and vehicle speed, so that such factors can be comprehensively considered in the subsequent processing and analysis of the video data to more accurately assist the user in locating vehicle's position.

At step S702, candidate target objects in respective video frames may be extracted based on the video data. In the present disclosure, a candidate target object refers to a target object that has specific features in the video frame and can be used to assist in vehicle finding, which may include characters or symbols, for example, a parking stall sign in a parking lot, a navigation sign, parking lot zoning information or channel access information. Alternatively or additionally, the candidate target object may also include an object with landmark characteristics, for example, a parking lot column, toll station, etc.

In an embodiment according to the present disclosure, as a non-limiting example, the order of extracting the candidate target objects in the respective video frames in this step may be processing in reverse order from the last frame in the video data, so that the candidate target objects closer to the position of the user's vehicle can be found more efficiently. It should be understood that a strategy of selection of the order of processing the respective video frames to extract the candidate target objects can be dynamically adjusted according to the actual demand scenario, which is not limited by the present disclosure.

In the method for vehicle finding according to this embodiment, the processing in this step S702 may be performed in various appropriate ways. Optionally, this step S702 further includes: performing target detection on the respective video frames to generate one or more prediction boxes containing candidate target objects; determining confidences for the one or more prediction boxes; determining a video frame in which the highest confidence for the prediction boxes is more than a threshold as a valid video frame; and selecting a subset of valid prediction boxes and extracting candidate target objects therefrom.

An example implementation of step S702 will be illustrated in detail below with further reference to Fig. 8.

Fig. 8 shows an example process 800 of extracting candidate target objects according to another embodiment of the present disclosure.

As shown in Fig. 8, at step S801, target detection may be performed on the respective video frames to generate one or more prediction boxes containing candidate target objects. For example, if an expected target object is detected in a current frame, a prediction box corresponding to the expected target object is generated; and if no expected target object is detected in the current frame, no prediction box is generated. In the present disclosure, various target detection algorithms may be used to detect the video data frame by frame so as to extract the candidate target objects. As a non-limiting example, R-CNN series algorithm or YOLO series algorithm may be used.

At step S802, a video frame in which the highest confidence for the prediction boxes is more than a threshold may be determined as valid video frames. A confidence for a prediction box can characterize a probability that the target object in this prediction box is the expected target object, and various appropriate manners can be adopted in the present disclosure to determine confidences for the calculated video frames. Optionally, corresponding optimization and adjustment can be made with respect to a solution of conventional target detection algorithm with different target objects. For example, as a non-limiting example, the target detection algorithm can be optimized in the present disclosure, so that a high confidence can be obtained for this prediction box only when a character/symbol is detected. Therefore, a type of candidate target object with high-quality characters/symbol can be accurately filtered out, so that the amount of data processing can be reduced and the overall efficiency and accuracy of calculation can be improved.

At step S803, a video frame in which the highest confidence for the prediction boxes is more than the threshold may be determined as a valid video frame.

The prediction box with the highest confidence means that, the probability that the candidate target object included in this prediction box is the expected target object is the highest. For example, in the step, for respective video frames, the confidences for respective prediction boxes contained therein are determined, and the video frame in which the highest confidence for the prediction boxes is more than the threshold is taken as a valid video frame for subsequent processing. In the present disclosure, different confidence thresholds may be trained with respect to different types of target detection algorithms, which is not limited by the present disclosure. By performing the above processing on frames with prediction boxes to obtain valid prediction frames, candidate target objects with high quality can be further selected therefrom, and the accuracy of recognition can be improved while reducing the amount of data processing in the subsequent recognition process.

As a non-limiting example, in the present disclosure, other video frames in addition to the valid prediction frames, such as frames in which no prediction box is generated, or video frame in which the highest confidence for the prediction boxes is not more than the threshold, may be removed as invalid frames from the set of video frames.

At step S804, the candidate target objects in the prediction boxes in respective valid video frames may be extracted. In this step, the candidate target objects may be extracted from the prediction boxes in various appropriate manners (e.g., an image including the candidate target objects may be intercepted from a valid video frame using a YOLO algorithm), which is not limited by the present disclosure. It should be noted that when extracting the contained candidate target object, there is a need to keep the timestamp of the frame where this valid prediction box is located for processing of subsequent steps.

Optionally, in this step, a prediction box with confidence more than the threshold in a valid video frame may be taken as a valid prediction box, and candidate target objects may be extracted from the valid prediction box, or only the prediction box with the highest confidence in the valid frame may be used as a valid prediction box for subsequent processing, thus reducing the amount of data processing. Furthermore, a subset of valid prediction boxes may be selected as needed, from which candidate target objects are extracted, thus further reducing the amount of data processing. Those skilled in the art may select an appropriate subset of valid prediction boxes in various appropriate manners, which is not limited by the present disclosure. For example, a predetermined number of valid prediction boxes with high confidence may be selected from the valid prediction boxes, or a valid prediction box with confidence more than a predetermined threshold may be selected, or a prediction box at a predetermined time point may be selected based on the timestamp of the frame where the prediction box is located, and so on.

The example process of extracting candidate target objects in the embodiment of the present disclosure has been described above with reference to Fig. 8. As an optional example, before step S801, the video data may be preprocessed to reduce the calculation burden, improve the efficiency of data processing, and guarantee the accuracy of information. Specifically, the data frames of the read video data may be converted into tensors frame by frame; then, the tensors of the video frames are adjusted to reduce the accuracy to a predetermined range (e.g., to semi-accuracy); and finally, the pixel values in the tensor are normalized to a specified range.

As another optional example, image quality enhancement may be performed on the candidate target objects extracted according to step S804 (e.g., the intercepted set of images including the candidate target objects). For example, the pixel value intensity distribution of the extracted images including the candidate target objects may be adjusted to enhance the overall clarity. For example, histogram equalization processing may be performed on the pixel value intensity distribution of the images, so that the gray value distribution of the images is more uniform, with an enhanced contrast and clearer details. The clarity of the candidate target objects on which the image recognition is to be performed is thus improved, so that the difficulty in recognition caused by poor image quality due to the low light in the indoor parking lot can be reduced, and the accuracy of recognition can be improved.

Referring back to Fig. 7, at step S703, character and/or symbol recognition may be performed on respective candidate target objects to obtain recognition results. For example, in an embodiment according to the present disclosure, a Convolutional Recursive Neural Network (CRNN) model may be used to perform batch prediction on the set of images of the extracted candidate target objects for character and symbol recognition. It should be understood that various image recognition algorithms may be used as needed to detect the extracted candidate target objects frame by frame so as to obtain the recognition results.

At step S704, priorities for respective recognition results may be determined according to preset weights, thereby determining a position of a user's vehicle based on the recognition result with the highest priority.

In an embodiment according to the present disclosure, weights of respective factors in the recognition results may be set as needed, thereby determining priorities for respective recognition results. As a non-limiting example, in the present disclosure, the preset weights may include at least one or more of: weights allocated sequentially based on timestamp of video frame corresponding to recognition result, weights allocated based on confidence for valid prediction box associated with recognition result, and weights allocated based on repetition frequency of recognition result among all recognition results. For example, if the timestamp of the video frame corresponding to the recognition result is closer to the parking time, a greater weight is allocated to this recognition result; or if the confidence for the valid prediction box associated with the recognition result is higher, a greater weight is allocated to this recognition result; or if the repetition frequency (or number of repetition times) of the recognition result among all recognition results is high, a greater weight is allocated to this recognition result.

In addition, as an alternative or an addition to timestamp, in an embodiment according to the present disclosure, a weight may also be allocated based on a distance parameter of the video frame associated with the recognition result. For example, the data processing apparatus 122 may read the distance parameter corresponding to the video frame from an Inertial Measurement Unit (IMU) of the vehicle while reading the video data from a data cache of the vehicle camera set, and allocate a greater weight to the video frame closer to the parking position.

By allocating weights in consideration of the above multiple factors and thus determining the priorities for the respective recognition results, and determining the position of the user's vehicle based on the recognition result with the highest priority, the data can be filtered and processed strategically, so that the accuracy of the final output recognition result and the correlation with the user's vehicle position can be improved, thereby helping determine the position of the user's vehicle more efficiently and accurately.

It should be understood that according to the method according to the embodiments of the present disclosure as described above in conjunction with Figs. 7- 8, in an alternative implementation, steps such as preprocessing, extracting candidate target objects, etc. may be performed to reduce the amount of data processing, reduce the hardware requirements and the cost for function implementation, and therefore, efficient local edge calculation can be realized without sending video data to a remote server (e.g., the cloud server 130) for processing. However, the method according to the embodiments of the present disclosure described above is not limited to being performed only at the vehicle-side apparatus 120, but may be performed at other sides (e.g., the cloud server 130) according to specific circumstances.

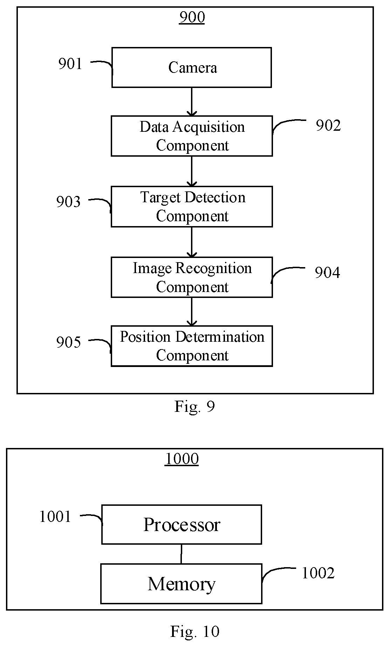

Fig. 9 shows a schematic diagram of an apparatus 900 for vehicle finding according to another embodiment of the present disclosure. As shown in Fig. 9, this apparatus may include a camera 901, a data acquisition component 902, a target detection component 903, an image recognition component 904 and a position determination component 905.

For example, in an embodiment according to the present disclosure, the camera 901 may include one or more of cameras on the front side, rear side, left side and right side of a vehicle.

Specifically, in an embodiment according to the present disclosure, the data acquisition component 902 may be configured to read video data recorded by the camera 901 in response to a vehicle finding request from a user side. The target detection section 903 may be configured to extract candidate target objects in respective video frames based on the video data. Optionally, the target detection component 903 may be configured to: perform target detection on the respective video frames to generate one or more prediction boxes containing candidate target objects; determine confidences for the one or more prediction boxes; determining a video frame in which the highest confidence for the prediction boxes is more than a threshold as a valid video frame; determining a prediction box with the highest confidence in the valid video frame as a valid prediction box; selecting a subset of valid prediction boxes and extract candidate target objects therefrom. The image recognition component 904 may be configured to perform character and/or symbol recognition on the respective candidate target objects to obtain recognition results. The position determination component 905 may be configured to determine priorities for respective recognition results according to preset weights and determine a position of a user's vehicle based on the recognition result with the highest priority. In an embodiment according to the present disclosure, the apparatus 900 may further include a result output component. The result output component may be configured to send the determined position of the user's vehicle to the user-side apparatus 110. Optionally, the result output component may process the position of the user's vehicle into a standardized format and send it, so that the standardization of information transmission can be guaranteed to the maximum extent, making the function extensible. For example, this standardized format may be expressed as, for example, building number of parking lot + floor number + area number + parking stall number. In a case that the system 100 includes the cloud server 130, the result output component may be communicatively coupled to an information obtaining component in the cloud, and the user-side apparatus 110 may receive, through an information pushing component installed thereon, the determined position of the user's vehicle from the cloud (e.g., the information obtaining component communicatively coupled to the cloud).

Optionally, after the user-side apparatus 110 receives the determined position of the user's vehicle and finishes the vehicle finding, the user may give a feedback (e.g., submit a text or picture feedback) with respect to the accuracy of this result, for optimizing the vehicle finding function. For example, if the determined position of the user's vehicle is different from the actual parking position, the user provides a picture feedback with respect to the actual parking position, which can be collected and used to optimize algorithms such as the target detection algorithm and image recognition algorithm in steps S702-S703, so that the user's experience can be continuously improved and the advancement in functions can be facilitated.

Fig. 10 shows a schematic diagram of a device 1000 for vehicle finding according to an embodiment of the present disclosure. As shown in Fig. 7, the device 1000 may include a processor 1001 and a memory 1002. Alternatively or additionally, the device 1000 may include a camera which records video data of the vehicle's surroundings.

The processor 1001 may be any device with processing capability that can implement various functions of the embodiments of the present disclosure. For example, it may be a general-purpose processor, a digital signal processor (DSP), an ASIC, a field programmable gate array (FPGA) or other programmable logic device (PLD), discrete gate or transistor logic, discrete hardware assemblies or any combination thereof that is designed to perform the functions described herein.

The memory 1002 may include computer system readable media in the form of volatile memory, such as random access memory (RAM) and/or cache memory, and may also include other removable/non-removable, volatile/nonvolatile computer system memories, such as hard disk drive, floppy disk, CD-ROM, DVD-ROM or other optical storage media.

In this embodiment, the memory 1002 has stored computer program instructions therein, and the processor 1001 may execute the instructions stored in the memory 1002. The computer program instructions, when executed by the processor, cause the processor to perform the method for vehicle finding according to the embodiments of the present disclosure. The method for vehicle finding is substantially the same as that described above with respect to Figs. 2- 9, so this will not be detailed here in order to avoid repetition.

The method/device for vehicle finding according to the present disclosure may also be implemented by providing a computer program product containing program codes for implementing the method or device, or by any storage medium having stored such a computer program product therein.

The advantages of the method and apparatus for vehicle finding according to the present disclosure include, but are not limited to:
the video recorded by the driving recorder is used as the video source for extracting feature points, and the driving recorder is a common vehicle-mounted device, so there is no need to add a video obtaining device, which reduces the cost for vehicle finding;
a fusion of multiple visual sources is used, and the video frames are screened based on such as confidence, so that the best visual data can be obtained efficiently and accurately, which reduces consumption of computational power;
in a case that the calculation is performed in conjunction with the cloud, only the coordinates of feature points in the video frames with relatively high quality instead of all the video frames need to be sent to the cloud server, thus greatly reducing the amount of communication data between the vehicle-side apparatus and the cloud server;
by using the visual positioning and the pre-acquired fusion map, the hardware dependence on parking lot infrastructure is reduced compared with the reverse vehicle finding solution in the prior art, thereby reducing the cost and improving the universality;
by the mechanism of strategically data preprocessing and probabilistically filtering, the calculation efficiency is improved, thereby enhancing the prediction performance of the function; and by using the lightweight visual model for local edge calculation, the hardware requirements and the cost for function implementation are reduced and the universality is improved;
the locally inferred text recognition information can be transmitted to the user's mobile application program, and through user interaction, the user's experience can be continuously improved and the advancement in function can be facilitated; and
the standardization of information transmission can be guaranteed to the maximum extent, making the function extensible, and the foundation can be laid for the potential enhancement of the navigation function inside the parking lot.

The basic principles of the present disclosure have been described above in conjunction with specific embodiments, but it is needed to be pointed out that the merits, advantages, effects, and the like mentioned in the embodiments of the present disclosure are only examples rather than limitations, and these merits, advantages, effects, and the like cannot be considered as necessary for various embodiments of the present disclosure. Additionally, the specific details disclosed above are only for the purpose of illustration and easy understanding, but not for limitation, and the above details do not limit that the present disclosure must be implemented with the above specific details.

The block diagrams of the devices, equipment, apparatuses and systems involved in the embodiments of the present disclosure are only illustrative examples and are not intended to require or imply that they must be connected, arranged and configured in the manner shown in the block diagrams. As those skilled in the art will recognize, these devices, equipment, apparatuses and systems can be connected, arranged and configured in any manner. Words such as "including", "containing", "having" and the like are open words, which refer to "including but not limited to" and can be used interchangeably therewith. The terms of "or" and "and" as used herein refer to the term of "and/or" and can be used interchangeably therewith, unless otherwise indicated clearly by the context. The term of "such as" used herein refers to the phrase of "such as but not limited to" and can be used interchangeably therewith.

Additionally, as used herein, the "or" used in the enumeration of items starting with "at least one" indicates a separate enumeration, so that, for example, the enumeration of "at least one of A, B or C" means A or B or C, or AB or AC or BC, or ABC (i.e., A and B and C). In addition, the wording of "exemplary" does not mean that the described example is preferred or better than other examples.

It is also needed to be pointed out that in the device and method of the present disclosure, various components or steps can be decomposed and/or recombined. Such decomposition and/or recombination should be regarded as equivalent solutions of the present disclosure.

For ordinary operators in the art, it can be understood that the entirety or any part of the method and device of the present disclosure can be implemented in hardware, firmware, software or their combination in any computing device (including processors, storage media, etc.) or network of computing devices. The said hardware may be a general-purpose processor, a digital signal processor (DSP), an ASIC, a field programmable gate array (FPGA) or other programmable logic device (PLD), discrete gate or transistor logic, discrete hardware components, or any combination thereof that is designed to carry out the functions described herein. A general-purpose processor may be a microprocessor, but in alternative, this processor may be any commercially available processor, controller, microcontroller or state machine. A processor may also be implemented as a combination of computing devices, for example, a combination of a DSP and a microprocessor, a plurality of microprocessors, one or more microprocessors cooperating with a DSP core, or any other such configuration. The said software may exist in any form of computer-readable tangible storage media. By way of example and not limitation, such computer-readable tangible storage media may include RAM, ROM, EEPROM, CD-ROM or other optical disk storage, magnetic disk storage or other magnetic storage devices or any other tangible media that can be used to carry or store desired program codes in the form of instructions or data structures and that can be accessed by a computer. As used herein, disc includes compact disc (CD), laser disc, optical disc, digital versatile disc (DVD), floppy disc and Blu-ray disc.

The above description has been presented for the purpose of illustration and description. In addition, this description is not intended to limit the embodiments of the present disclosure to the forms disclosed herein. Although many example aspects and embodiments have been discussed above, those skilled in the art will recognize certain variations, modifications, changes, additions and subcombinations thereof.

## Claims

1. A method (200) for vehicle finding, comprising:
reading (S201) video data recorded by a vehicle camera in response to a vehicle finding request from a user;
extracting (S202) feature point data based on the video data; and
matching (S203) the feature point data with a pre-acquired map of a parking environment to obtain coordinates of a vehicle in a vector map,
wherein the extracting feature point data based on the video data comprises:
performing simultaneous localization and mapping (SLAM) modeling on video data that is in a period of time before the vehicle stops to extract feature point data;
performing screening on the feature point data to exclude feature point data corresponding to video frames (300) with confidence lower than a confidence threshold; and
sending the screened feature point data to a cloud for the matching.

2. The method (200) according to claim 1, further comprises sending the coordinates of the vehicle in the vector map from the cloud to the user.

3. The method (200) according to any of claims 1-2, wherein the pre-acquired map of the parking environment is a fusion map that is pre-stored in the cloud including a point cloud base map and a vector map.

4. The method (200) according to any of claims 1-3, wherein:
(S402) in a case where a number of feature points that have been extracted in a current video frame is determined to be more than a number threshold, the extracting of feature points of the current video frame is stopped, (S404) the extracted feature points are sent to the cloud, and the extracting of feature points of the next video frame is started; and
(S402) in a case where a number of all feature points extracted in the current video frame is determined not to be more than the number threshold, the feature points extracted in the current video frame are excluded, and (S405) the extracting of feature point of the next video frame is started.

5. The method (200) according to any of claims 1-4, wherein the video data is panoramic video data around the vehicle obtained by a plurality of cameras (901) with different shooting orientations in the vehicle camera.

6. A device (1000) for vehicle finding, comprising:
a camera (901), recording video data of the vehicle's surroundings;
a memory (1002) having stored computer instructions thereon; and
a processor (1001),
wherein the instructions, when executed by the processor (1001), cause the processor (1001) to perform:
reading (S201) video data recorded by the camera (901) in response to a vehicle finding request from a user;
extracting (S202) feature point data based on the video data; and
matching (S203) the feature point data with a pre-acquired map of a parking environment to obtain coordinates of the vehicle in a vector map,
wherein the extracting feature point data based on the video data comprises:
performing simultaneous localization and mapping (SLAM) modeling on video data that is in a period of time before the vehicle stops to extract feature point data;
performing screening on the feature point data to exclude feature point data corresponding to video frames (300) with confidence lower than a confidence threshold; and sending the screened feature point data to a cloud for the matching.

## Patentansprüche

1. Verfahren (200) zur Fahrzeugauffindung, das Folgendes umfasst:
Auslesen (S201) von durch eine Fahrzeugkamera aufgezeichneten Videodaten als Reaktion auf eine Fahrzeugauffindungsanforderung von einem Benutzer;
Extrahieren (S202) von Merkmalspunktdaten basierend auf den Videodaten; und
Abgleichen (S203) der Merkmalspunktdaten mit einer vorab erfassten Karte einer Parkumgebung, um Koordinaten eines Fahrzeugs in einer Vektorkarte zu erhalten,
wobei das Extrahieren von Merkmalspunktdaten basierend auf den Videodaten Folgendes umfasst:
Durchführen einer simultanen Lokalisierungs- und Kartierungs(SLAM)-Modellierung an Videodaten, die in einem Zeitraum vor einem Anhalten des Fahrzeugs liegen,
um Merkmalspunktdaten zu extrahieren;
Durchführen einer Filterung an den Merkmalspunktdaten, um Merkmalspunktdaten auszuschließen, die Videobildern (300) mit einer Konfidenz entsprechen, die niedriger als ein Konfidenzschwellenwert ist; und
Senden der gefilterten Merkmalspunktdaten an eine Cloud für das Abgleichen.

2. Verfahren (200) nach Anspruch 1, das ferner Senden der Koordinaten des Fahrzeugs in der Vektorkarte von der Cloud an den Benutzer umfasst.

3. Verfahren (200) nach einem der Ansprüche 1-2, wobei die vorab erfasste Karte der Parkumgebung eine Fusionskarte ist, die in der Cloud vorgespeichert ist, die eine Punktwolkenbasiskarte und eine Vektorkarte beinhaltet.

4. Verfahren (200) nach einem der Ansprüche 1-3, wobei:
(S402) falls bestimmt wird, dass eine Anzahl von Merkmalspunkten, die in einem aktuellen Videobild extrahiert wurden, größer als ein Anzahlschwellenwert ist, das Extrahieren von Merkmalspunkten des aktuellen Videobildes angehalten wird, (S404) die extrahierten Merkmalspunkte an die Cloud gesendet werden, und das Extrahieren von Merkmalspunkten des nächsten Videobildes gestartet wird; und
(S402) falls bestimmt wird, dass eine Anzahl aller in dem aktuellen Videobild extrahierten Merkmalspunkte nicht größer als der Anzahlschwellenwert ist, die in dem aktuellen Videobild extrahierten Merkmalspunkte ausgeschlossen werden, und (S405) mit dem Extrahieren eines Merkmalspunkts des nächsten Videobildes begonnen wird.

5. Verfahren (200) nach einem der Ansprüche 1-4, wobei die Videodaten Panoramavideodaten um das Fahrzeug herum sind, die durch mehrere Kameras (901) mit unterschiedlichen Aufnahmeausrichtungen in der Fahrzeugkamera erhalten werden.

6. Vorrichtung (1000) zur Fahrzeugauffindung, die Folgendes umfasst:
eine Kamera (901), die Videodaten der Umgebung des Fahrzeugs aufzeichnet;
einen Speicher (1002), auf dem Computeranweisungen gespeichert sind; und
einen Prozessor (1001),
wobei die Anweisungen, wenn sie durch den Prozessor (1001) ausgeführt werden, bewirken, dass der Prozessor (1001) Folgendes durchführt:
Auslesen (S201) von durch die Kamera (901) aufgezeichneten Videodaten als Reaktion auf eine Fahrzeugauffindungsanforderung von einem Benutzer;
Extrahieren (S202) von Merkmalspunktdaten basierend auf den Videodaten; und
Abgleichen (S203) der Merkmalspunktdaten mit einer vorab erfassten Karte einer Parkumgebung, um Koordinaten des Fahrzeugs in einer Vektorkarte zu erhalten,
wobei das Extrahieren von Merkmalspunktdaten basierend auf den Videodaten Folgendes umfasst:
Durchführen einer simultanen Lokalisierungs- und Kartierungs(SLAM)-Modellierung an Videodaten, die in einem Zeitraum vor einem Anhalten des Fahrzeugs liegen, um Merkmalspunktdaten zu extrahieren;
Durchführen einer Filterung an den Merkmalspunktdaten, um Merkmalspunktdaten auszuschließen, die Videobildern (300) mit einer Konfidenz entsprechen, die niedriger als ein Konfidenzschwellenwert ist; und
Senden der gefilterten Merkmalspunktdaten an eine Cloud für das Abgleichen.

## Revendications

1. Procédé (200) pour trouver un véhicule, comprenant :
la lecture (S201) de données vidéo enregistrées par une caméra de véhicule en réponse à une demande de trouver un véhicule en provenance d'un utilisateur ;
l'extraction (S202) de données de points de caractéristiques sur la base des données vidéo ; et
la mise en coïncidence (S203) des données de points de caractéristiques avec une carte pré-acquise d'un environnement de stationnement pour obtenir des coordonnées d'un véhicule dans une carte vectorielle, dans lequel l'extraction de données de points de caractéristiques sur la base des données vidéo comprend :
la réalisation d'une modélisation de localisation et de mappage simultanés (Simultaneous Localization and Mapping, SLAM) sur des données vidéo qui sont dans un laps de temps avant que le véhicule ne s'arrête pour extraire des données de points de caractéristiques ;
la réalisation d'un filtrage sur les données de points de caractéristiques pour exclure des données de points de caractéristiques correspondant à des vues vidéo (300) avec une confiance inférieure à un seuil de confiance ; et
l'envoi des données de points de caractéristiques filtrée à un nuage pour la mise en coïncidence.

2. Procédé (200) selon la revendication 1, comprenant en outre l'envoi des coordonnées du véhicule dans la carte vectorielle depuis le nuage à l'utilisateur.

3. Procédé (200) selon de quelconques des revendications 1 et 2, dans lequel la carte pré-acquise de l'environnement de stationnement est une carte de fusion qui est préstockée dans le nuage incluant une carte à base de nuage de points et une carte vectorielle.

4. Procédé (200) selon quelconques des revendications 1 à 3, dans lequel :
(S402) au cas où il serait déterminé qu'un nombre de points de caractéristiques qui ont été extraits dans une vue vidéo actuelle est supérieur à un nombre seuil, l'extraction de points de caractéristiques de la vue vidéo actuelle est arrêtée, (S404) les points de caractéristiques extraits sont envoyés au nuage, et l'extraction de points de caractéristiques de la vue vidéo suivante est arrêtée ; et
(S402) au cas où il serait déterminé qu'un nombre de tous les points de caractéristiques extraits dans la vue vidéo actuelle n'est pas supérieur au nombre seuil, les points de caractéristiques extraits dans la vue vidéo actuelle sont exclus, et (S405) l'extraction de points de caractéristiques de la vue vidéo suivante est arrêtée.

5. Procédé (200) selon quelconques des revendications 1 à 4, dans lequel les données vidéo sont des données vidéo panoramiques autour du véhicule obtenues par une pluralité de caméras (901) avec des orientations de prise de vue différentes dans la caméra de véhicule.

6. Dispositif (1000) pour trouver un véhicule, comprenant :
une caméra (901), enregistrant des données vidéo des environnements du véhicule ;
une mémoire (1002) ayant des instructions d'ordinateur stockées sur celle-ci ; et
un processeur (1001),
dans lequel les instructions, lorsqu'elles sont exécutées par le processeur (1001), amènent le processeur (1001) à réaliser :
la lecture (S201) de données vidéo enregistrées par la caméra (901) en réponse à une demande de trouver un véhicule en provenance d'un utilisateur ;
l'extraction (S202) de données de points de caractéristiques sur la base des données vidéo ; et
la mise en coïncidence (S203) des données de points de caractéristiques avec une carte pré-acquise d'un environnement de stationnement pour obtenir des coordonnées du véhicule dans une carte vectorielle,
dans lequel l'extraction de données de points de caractéristiques sur la base des données vidéo comprend :
la réalisation d'une modélisation de localisation et de mappage simultanés (Simultaneous Localization and Mapping, SLAM) sur des données vidéo qui sont dans un laps de temps avant que le véhicule ne s'arrête pour extraire des données de points de caractéristiques ;
la réalisation d'un filtrage sur les données de points de caractéristiques pour exclure des données de points de caractéristiques correspondant à des vues vidéo (300) avec une confiance inférieure à un seuil de confiance ; et
l'envoi des données de points de caractéristiques filtrée à un nuage pour la mise en coïncidence.
